## Europäisches Patentamt
## European Patent Office
## Office européen des brevets

(19)

(11) Numéro de publication: **0 166 062**
**B1**

(12) # FASCICULE DE BREVET EUROPÉEN

(45) Date de publication du fascicule du brevet:
**25.10.89**

(51) Int. Cl.⁴: **G 06 F 13/36**

(21) Numéro de dépôt: **84430024.4**

(22) Date de dépôt: **29.06.84**

(54) Dispositif d'arbitrage d'accès à une ressource partagée.

(43) Date de publication de la demande:
**02.01.86 Bulletin 86/1**

(45) Mention de la délivrance du brevet:
**25.10.89 Bulletin 89/43**

(84) Etats contractants désignés:
**DE FR GB**

(56) Documents cité:
**EP-A-0 032 864**
**EP-A-0 044 765**
**US-A-4 245 299**

**ELEKTRONIK, vol. 29, no. 8, avril 1980, pages 65-68, Munich, DE; G. FÄRBER: "Ein dezentralisierter fairer Bus-Arbiter"**
**IBM TECHNICAL DISCLOSURE BULLETIN, vol. 23, no. 4, septembre 1980, pages 1323-1325, New York, US; A.D. EDGAR: "Bus arbitration logic"**

(73) Titulaire: **International Business Machines Corporation, Old Orchard Road, Armonk, N.Y. 10504 (US)**
(84) Etats contractants désignés: **DE GB**

(73) Titulaire: **Compagnie IBM FRANCE, 5 Place Vendôme, F-75000 Paris 1er (FR)**
(84) Etats contractants désignés: **FR**

(72) Inventeur: **Ballatore, Daniel, Le Fugueret Pont du Loup, F-06620 Bar Sur Loup (FR)**
Inventeur: **Huon, Simon, Chemin du Trastour, F-06330 Roquefort Les Pins (FR)**
Inventeur: **Munier, Jean- Marie, 11 Chemin des Colles, F-06800 Cagnes- Sur- Mer (FR)**

(74) Mandataire: **de Pena, Alain, Compagnie IBM France Département de Propriété Intellectuelle, F-06610 La Gaude (FR)**

## Description

La présente invention concerne les systèmes de communications de données et plus particulièrement un dispositif pour arbitrer les conflits d'accès à une ressource partagée par plusieurs processeurs.

## Etat de la Technique

L'essor des microprocesseurs a fait apparaître une nouvelle architecture des systèmes de traitement de données, qui est basée sur l'utilisation de plusieurs microprocesseurs qui communiquent entre eux a grande vitesse à travers une mémoire commune. Les microprocesseurs et la mémoire communiquent entre eux au moyen d'un bus commun à travers lequel ils échangent données, adresses et divers signaux de contrôle. Etant donné que le bus commun ne peut être utilisé que par un seul microprocesseur, à un instant donné, il est important que de tels systèmes de traitement de données soient pourvus de moyens capables de contrôler l'accès des microprocesseurs au bus commun, afin d'éviter que plusieurs d'entre eux n'accèdent simultanément au bus commun, ce qui entraînerait des erreurs. Il existe dans l'art antérieur un très grand nombre de dispositifs d'arbitrage pour contrôler l'accès à une ressource partagée, et il serait fastidieux d'en faire une énumération ici.

Un inconvénient de ces dispositifs est qu'ils sont souvent conçus pour des processeurs particuliers ou des ressources particulières et qu'il est difficile de les utiliser avec des processeurs ou des ressources ayant des caractéristiques différentes de celles des processeurs et ressources pour lesquels ils ont été conçus.

Un inconvénient d'autres dispositifs d'arbitrage de l'art antérieur est qu'ils sont conçus pour résoudre les conflits d'accès dans la plupart des applications et dans la plupart des cas qui peuvent se présenter, ce qui en fait des dispositifs complexes. Cette complexité, si elle se justifie pour des applications élaborées, rend ces dispositifs d'arbitrage lents et mal adaptés à des applications simples où il n'est pas nécessaire de prévoir des priorités entre les divers processeurs, ou alors des priorités très simples.

L'article "Bus Arbitration Logic" de A.D. Edgar, paru dans IBM TDB, Vol. 23, N° 4, Sept. 1980, pages 1323-1325 décrit une logique d'arbitrage pour résoudre les contentions lorsque plusieurs dispositifs desirent accéder à un bus commun. Un module est associé à chacun des dispositifs et comprend une première porte qui reçoit la demande d'accès du dispositif et les demandes d'accès des dispositifs de priorité inférieure et dont la sortie est appliquée à une première entrée d'une bascule. La demande d'accès du dispositif est aussi appliquée à une seconde porte qui reçoit aussi les demandes d'accès des dispositifs de priorité supérieure et dont la sortie est appliquée à la seconde entrée de la bascule. La sortie de la bascule qui correspond à sa première entrée fournit un signal d'accord d'accès au dispositif associé, alors que l'autre sortie de la bascule, inversée, fournit un signal de demande d'accès qui est appliqué aux autres modules. Cette logique d'arbitrage, quoique plus simple que celles présentées ci-dessus, offre cependant un certain degré de complexité et d'incertitude lié à la gestion séparée des priorités supérieures et inférieures à celle du dispositif demandant l'accès au bus.

## Exposé de l'Invention

L'objet de l'invention est de pallier à ces inconvénients, et de fournir un dispositif d'arbitrage très simple qui permet de résoudre les conflits d'accès à une ressource partagée, avec attribution de priorités simples aux processeurs qui partagent cette ressource.

Les caractéristiques de la présente invention ressortiront mieux de l'exposé qui suit, fait en référence aux dessins annexés à ce texte, qui représente un mode de réalisation préféré de l'invention.

Le dispositif d'arbitrage à priorités de l'invention, pour contrôler l'accès à une ressource partagée par N processeurs (PROC 1 - PROC N) auxquels elle est reliée par un bus commun (10), chaque processeur comprenant une sortie (P10 - PN0) de demande d'accès à la ressource partagée et une entrée (P11 - PN1) d'accord d'accès, comprend N bascules (L1 - LN) et N premiers moyens de porte (G'1 - G'N) associés respectivement aux N processeurs, et des seconds moyens de porte (20, 30) associés aux processeurs, et est caractérisé en ce que:

chacun des N premiers moyens de porte (G'1 - G'2) a une entrée reliée à la sortie de demande d'accès (P10 - PN0) du processeur auquel il est associé,

chacune des bascules (L1 - LN) a une première entrée (S) reliée à la sortie du premier moyen de porte (G'1 - G'N) auquel elle est associée, et sa sortie (Q1 - QN) correspondant à ladite première entrée reliée à l'entrée d'accord d'accès (P11 - PN1) du processeur auquel elle est associée et à une entrée de chacun des autres premiers moyens de porte, et

les seconds moyens de porte (20) permettent d'appliquer à la seconde entrée de chacune des bascules (L1 - LN) la sortie de demande d'accès ((P10 - PN0) des processeurs qui ont une priorité supérieure à celle du processeur associé à cette bascule, de telle sorte que lorsqu'un processeur demande l'accès à la ressource partagée, il fait passer sa sortie de demande d'accès à premier niveau prédéterminé, et l'accès à cette ressource ne lui est autorisé que si en réponse à sa demande, un second niveau prédéterminé est appliqué à son entrée d'accord d'accès (P11 - PN1), et que lorsque au moins deux processeurs de priorités différentes demandent l'accès à la ressource partagée alors que celle-ci est occupée, après que celle-ci soit libérée, seule la sortie de la bascule associée à celui de ces processeurs qui a la priorité la plus élevée passe audit second niveau prédéterminé, autorisant l'accès à la ressource partagée à ce seul processeur.

## Brève Description des Figures

La figure 1 est un bloc diagramme qui illustre un exemple de réalisation d'un dispositif d'arbitrage.

La figure 2 est un bloc diagramme qui illustre un exemple de réalisation d'un dispositif d'arbitrage à priorités conformes à l'invention.

## Description Détaillée de l'Invention

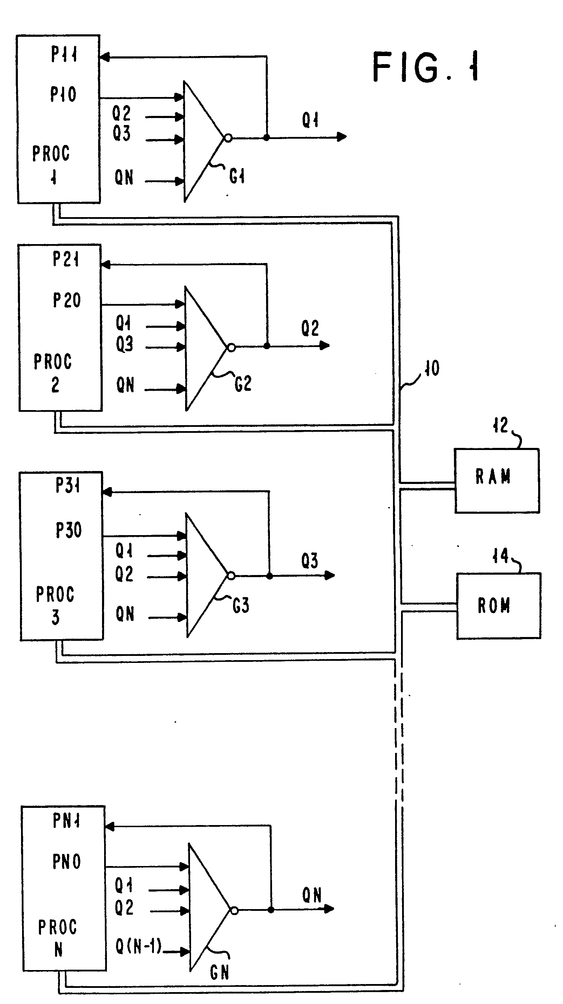

On a représenté sur la figure 1 un système multi-processeur qui incorpore un dispositif d'arbitrage. Le système comprend plusieurs processeurs qu'on a illustrés par quatre processeurs référencés respectivement PROC 1, PROC 2, PROC 3 et PROC N. Les sorties de ces processeurs sont reliées entre elles et a un bus commun 10 auquel sont aussi reliées les diverses ressources partagées par ces processeurs, et qu'on a illustrées par une mémoire à accès aléatoire (RAM) 12, et une mémoire permanente (ROM) 14. De façon conventionnelle, chacun des processeurs PROC 1 - PROC N est muni de plusieurs entrées et sorties contrôlables par programme, mais dans un souci de simplification, chaque processeur n'a été représenté sur la figure 1 qu'avec une seule entrée et une seule sortie, dont l'utilisation est spécifique à l'invention. Dans les processeurs PROC 1, PROC 2, PROC 3 et PROC N, cette entrée a été désignée respectivement par P11, P21, P31 et PN1, et cette sortie a été désignée respectivement par P10, P20, P30 et PN0. Les N processeurs PROC 1, PROC 2, PROC 3,..., PROC N-1, PROC N sont associés respectivement avec N portes NON ET à N entrées G1, G2, G3,..., G(N-1), GN, dont les sorties produisent respectivement des signaux Q1, Q2, Q3,..., Q(N-1), QN. La sortie P10 et les signaux Q2, Q3,..., QN sont appliqués à la porte NON ET G1, la sortie P20 et les signaux Q1, Q3,..., QN sont appliqués à la porte NON ET G2, la sortie P30 et les signaux Q1, Q2, Q4,..., QN sont appliqués à la porte NON ET Q3, et ainsi de suite, les signaux PN0, Q1, Q2,..., Q(N-1) étant appliqués à la porte NON ET GN. Les signaux Q1, Q2, Q3,..., QN sont appliqués respectivement aux entrées P11, P21, P31,..., PN1.

En fonctionnement, lorsque le bus commun 10 est libre, toutes les sorties P10, P20,..., PN sont à un niveau bas et, en conséquence, tous les signaux Q1, Q2,..., QN sont à un niveau haut. Lorsqu'un processeur, par exemple, le processeur PROC 1 veut accéder au bus 10, il demande cet accès en faisant passer sa sortie P10 au niveau haut. Ce niveau haut fait passer le signal Q1 au niveau bas et les signaux Q2 à QN au niveau haut. Après avoir demandé l'accès au bus, le processeur PROC 1 lit le niveau appliqué à son entrée P11. Comme le signal Q1 est au niveau bas, l'entrée P11 est au niveau bas, ce qui indique au processeur PROC 1 qu'il peut accéder au bus commun 10.

Pendant que le processeur PROC 1 accède au bus 10, si un autre processeur par exemple, le processeur PROC 2, veut y accéder, 11 demande l'accès au bus en faisant passer sa sortie P20 au niveau haut, puis lit le niveau sur son entrée P21. Comme le signal Q1 a été mis au niveau bas par l'accès du processeur PROC 1 au bus 10, le niveau haut sur la sortie P20 n'a aucun effet sur le niveau de la sortie de la porte NON ET G2, et le signal Q2 est maintenu au niveau haut. Lorsque le processeur PROC 2 lit son entrée P21, il y lit un niveau haut qui lui interdit l'accès au bus commun 10.

Lorsque le processeur PROC 1 libère le bus commun 10, il fait passer sa sortie P10 au niveau bas, et le signal Q1 passe au niveau haut. Les signaux Q1 - QN sont alors tous au niveau haut, ce qui indique que le bus commun 10 est libre. Le premier processeur qui demande alors l'accès au bus commun 10 pourra y accéder comme décrit ci-dessus.

Si plusieurs processeurs veulent accéder le bus simultanément et alors que celui-ci est libre, de façon aléatoire l'une des sorties des portes NON ET associées à ces processeurs passera la première au niveau bas, permettant l'accès au bus commun 10 à son processeur associé et interdisant l'accès au bus 10 à tous les autres processeurs.

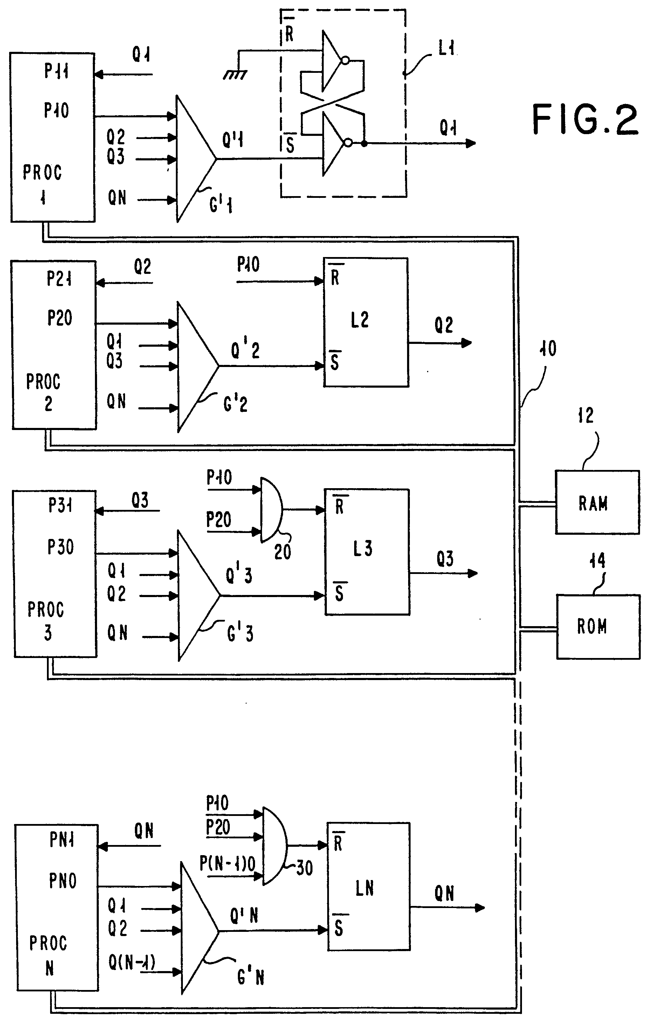

On a représenté sur la figure 2, selon l'invention, un perfectionnement au dispositif de la figure 1, qui permet au dispositif d'arbitrage de contrôler l'accès au bus commun en tenant compte d'un ordre de priorite parmi les processeurs. Les éléments communs aux dispositifs des figures 1 et 2 portent les mêmes références. Les processeurs PROC 1, PROC 2, PROC 3,..., PROC N-1, PROC N sont associés respectivement avec N portes ET à N entrées G'1, G'2, G'3,..., G'(N-1), G'N, dont les sorties sont reliées respectivement à l'entrée S̄ de N bascules de type RS, L1 à LN, et produisent respectivement N signaux intermédiaires désignés Q1', Q2', Q3',..., Q(N-1)', QN'. Les bascules L1 à LN produisent respectivement les signaux Q1 à QN. La sortie P10 et les signaux Q2, Q3,..., QN sont appliqués à la porte ET G'1, la sortie P20 et les signaux Q1, Q3,..., QN sont appliqués à la porte ET G'2, la sortie P30 et les signaux Q1, Q2, Q4,..., QN sont appliqués à la porte ET G'3, et ainsi de suite, les signaux PN0, Q1, Q2,..., Q(N-1) étant appliqués à la porte ET G'N. Les signaux Q1, Q2, Q3,..., QN sont appliqués respectivement aux entrées P11, P21, P31,..., PN1. Dans l'exemple de réalisation illustré sur la figure 2, chacune des bascules L1 à LN est constituée de façon conventionnelle par deux portes NON ET à couplage en croix, et on a supposé que les processeurs PROC 1 à PROC N avaient des priorités décroissantes. L'entrée R̄ de la bascule associée au processeur ayant la plus haute priorité, c'est à dire dans notre exemple la bascule L1, est maintenue au niveau bas par, par exemple une connexion à la masse. L'entrée R̄ de la bascule ayant la seconde priorité, la bascule L2, est reliée à la sortie P10. L'entrée R̄ de la bascule L3 est reliée à la sortie d'une porte OU 20 dont les entrées sont reliées aux sorties des processeurs ayant une priorité supérieure à celle du processeur associé, c'est à dire aux sorties P10 et P20. L'entrée R̄ de la bascule LN est reliée à la sortie d'une porte OU 30 dont les entrées sont reliées aux sorties P10, P20,...,P(N-1).

En fonctionnement, lorsque le bus commun 10 est libre, toutes les sorties P10, P20,..., PN sont à un niveau bas et, en conséquence, tous les signaux Q1', Q2',..., QN' sont au niveau bas, et tous les signaux Q1, Q2, Q3,..., Q(N-1), QN sont au niveau haut. Lorsqu'un processeur, par exemple, le processeur PROC 1 veut accéder au bus 10, il demande cet accès en faisant passer sa sortie P10 au niveau haut. Ce niveau haut fait passer le signal Q1' au niveau haut et le signal Q1 au niveau bas. Après avoir demandé l'accès au bus, le processeur PROC 1 lit le niveau appliqué à son entrée P11. Comme le signal Q1 est au niveau bas, l'entrée P11 est au niveau bas, ce qui indique au processeur PROC 1 qu'il peut accéder au bus commun 10. Le signal Q1 étant au niveau bas, les signaux Q2', Q3',..., QN' sont au niveau bas, et les signaux Q2, Q3,..., QN sont au niveau haut, interdisant aux autres processeurs l'accès au bus commun 10.

Pendant que le processeur PROC 1 accède au bus 10, si deux autres processeurs, par exemple, les processeurs PROC 2 et PROC 3 veulent y accéder, ils demandent tous deux l'accès au bus en faisant passer les sorties P20 et P30 au niveau haut et lorsque le bus sera libre, l'accès sera donné à celui des deux processeurs qui a la plus haute priorité, c'est à dire le processeur PROC 2, comme expliqué ci-dessous.

Le processeur PROC 1 libère le bus en faisant passer la sortie P10 au niveau bas. Ce niveau bas est appliqué directement à l'entrée R̄ de la bascule L2, la restaure et fait passer le signal Q2 au niveau bas. Ce niveau bas est appliqué à l'entrée P21 du processeur PROC 2 et l'informe qu'il est autorisé à accéder au bus 10. Le niveau bas sur la sortie P10 n'a aucun effet sur l'entrée R de la bascule L3, cette entrée R̄ étant maintenue au niveau haut par le niveau haut sur la sortie P20 du processeur PROC 2 qui a une priorité supérieure à celle du processeur PROC 3.

Avec le dispositif de la figure 2, il est possible d'attribuer la même priorité à plusieurs processeurs. Par exemple, si on veut affecter la même priorité aux processeurs PROC 2 et PROC 3, il suffit de supprimer la connexion entre la sortie P20 du processeur PROC 2 et l'entrée R̄ de la bascule L3, c'est à dire de supprimer la porte OU 20 et de relier la sortie P10 directement à l'entrée R̄ de la bascule L3. Dans ce cas les entrées R̄ des bascules L2 et L3 sont commandées de façon identique et en parallèle. Lorsque deux processeurs ayant la même priorité demandant simultanément l'accès au bus commun, l'accès au bus est donné de façon aléatoire à l'un des deux processeurs demandeurs comme dans le dispositif de la figure 1.

**Revendications**

1. Dispositif d'arbitrage à priorités pour contrôler l'accès à une ressource partagée par N processeurs (PROC 1 - PROC N) auxquels elle est reliée par un bus commun (10), chaque processeur comprenant une sortie (P10 - PN0) de demande d'accès à la ressource partagée et une entrée (P11 - PN1) d'accord d'accès, ce dispositif d'arbitrage comprenant N bascules (L1 - LN) et N premiers moyens de porte (G'1 - G'N) associés respectivement aux N processeurs, et des seconds moyens de porte (20, 30) associés aux processeurs, caractérisé en ce que:

chacun des N premiers moyens de porte (G'1 - G'2) a une entrée reliée à la sortie de demande d'accès (P10 - PN0) du processeur auquel il est associé,

chacune des bascules (L1 - LN) a une première entrée (S) reliée à la sortie (Q'1 - Q'N) du premier moyen de porte (G'1 - G'N) auquel elle est associée, et sa sortie (Q1 - QN) correspondant à ladite première entrée reliée à l'entrée d'accord d'accès (P11 - PN1) du processeur auquel elle est associée et à une entrée de chacun des autres premiers moyens de porte, et

les seconds moyens de porte (20) permettent d'appliquer à la seconde entrée de chacune des bascules (L1 - LN) la sortie de demande d'accès ((P10 - PN0) des processeurs qui ont une priorité supérieure à celle du processeur associé à cette bascule, de telle sorte que lorsqu'un processeur demande l'accès à la ressource partagée, il fait passer sa sortie de demande d'accès à premier niveau prédéterminé, et l'accès à cette ressource ne lui est autorisé que si en réponse à sa demande, un second niveau prédéterminé est appliqué à son entrée d'accord d'accès (P11 - PN1), et que lorsque au moins deux processeurs de priorités différentes demandant l'accès à la ressource partagée alors que celle-ci est occupée, après que celle-ci soit libérée, seule la sortie de la bascule associée à celui de ces processeurs qui a la priorité la plus élevée passe audit second niveau prédéterminé, autorisant l'accès à la ressource partagée à ce seul processeur.

2. Dispositif selon la revendication 1, caractérisé en ce que lesdits premiers moyens de porte sont des portes ET, et lesdites bascules sont du type RS.

**Patentansprüche**

1. Entscheidungsschaltung mit Prioritäten für die Zugangssteuerung zu einer geteilten Ressource durch N Prozessoren (PROC 1 - PROC N), mit denen sie durch eine gemeinsame Busleitung (10) verbunden ist, wobei jeder Prozessor einen Ausgang (P10 - PN0) für die Zugangsanforderung an die geteilte Ressource und einen Eingang (P11 - PN1) für die Zugangsgenehmigung enthält, wobei diese Entscheidungsschaltung N Kippschaltungen (L1 - LN) und N erste Tormittel (G'1 - G'N) enthält, die jeweils N Prozessoren zugeordnet sind, und zweite Tormittel (20, 30), die den Prozessoren zugeordnet sind, dadurch gekennzeichnet, dass:

jedes der N ersten Tormittel (G'1 - G'N) einen mit dem Ausgang der Zugangsanforderung (P10 - PN0) des Prozessors, dem es zugeordnet ist, verbundenen Eingang besitzt,

jede der Kippschaltungen (L1 - LN) einen ersten Eingang (S) besitzt, der mit dem Ausgang (Q'1 - Q'N) des ersten Tormittels (G'1 - G'N) verbunden ist, dem sie zugeordnet ist, während ihr Ausgang (Q1 - QN), der dem besagten ersten Eingang für die Zugangsgenehmigung (P11 - PN1) des ihr zugeordneten Prozessors entspricht, mit einem Eingang von jedem der anderen ersten Tormittel verbunden ist, und

die zweiten Tormittel (20) das Anlegen des Ausgangs der Zugangsanforderung (P10 - PN0) der Prozessoren an den zweiten Eingang einer jeden der Kippschaltungen (L1 - LN) gestatten, wenn diese Prozessoren eine höhere Priorität als die des der jeweiligen Kippschaltung zugeordneten Prozessors aufweisen, sodass ein Prozessor, wenn er den Zugang zur geteilten Ressource anfordert, seinen Zugangsanforderungsausgang auf einen ersten vorgegebenen Pegel schaltet, und der Zugang zu dieser Ressource ihm nur dann gewährt wird, wenn, als Antwort auf seine Aufforderung, ein zweiter vorgegebener Pegel an seinen Zugangsgenehmigungseingang (P11 - PN1) gelegt wird, und, wenn mindestens zwei Prozessoren anderer Prioritäten den Zugang zur geteilten Ressource anfordern, während diese belegt ist, nachdem sie frei wird, nur der Ausgang der Kippschaltung, die dem dieser Prozessoren zugeordnet ist, der die höchste Prioritätsstufe hat, auf den zweiten vorgegebenen Pegel übergeht und dadurch den Zugang zur geteilten Ressource nur für diesen Prozessor freigibt.

2. Vorrichtung gemäss Anspruch 1, dadurch gekennzeichnet, dass die besagten ersten Tormittel AND-Schaltungen und die besagten Kipps RS-Kippschaltungen sind.

**Claims**

1. An arbitration device using priorities for controlling access to a resource shared among N processors (PROC 1 - PROC N) connected thereto by a common bus (10), each processor including an output (P10 - PN0) to request access to the shared resource and an input (P11 - PN1) to give access to said shared resource, said arbitration device comprising N latches (L1 - LN) and N first gate means (G'1 - G'N) respectively associated with said N processors, characterized in that:

each of said N first gate means (G'1 - G'2) has an input connected to the access request output (P10 - PN0) of its respective associated processor,

each of said latches (L1 - LN) has a first input (S) connected to the output (Q'1 - Q'N) of the first gate means (G'1 - G'N) associated thereto, and its output (Q1 - QN) corresponding to said first input connected to the giving access input (P11 - PN1) of the processor associated thereto and to an input of each of the other first gate means, and

the second gate means (20) allows the access request output (P10 - PN0) of the processors having a priority higher than the priority of the processor associated to said latch, to be applied to the second input of each of said latches (L1 - LN) so that when a processor requests access to the shared resource, it causes its access request output to go to a first predetermined level and will only be given access to said resource if, in response to its request, a second predetermined level is applied to its giving access input (P11 - PN1), and when at least two processors having different priorities are requesting access to the shared resource while the resource is busy after having been made available, only the output from the latch associated with the one of said processors that has the highest priority will go to said second predetermined level, thereby giving that processor access to the shared resource.

2. A device according to claim 1 characterized in that said first gate means are AND gates and in that said latches are RS-Type latches.

FIG. 1

FIG.2